# EUROPEAN PATENT APPLICATION

(11) **EP 4 794 025 A1**
(43) Date of publication of application: **19.08.2026**
(21) Application number: 24877146.1
(22) Date of filing: 07.10.2024
(51) Int. Cl.: H01M 4/48, C01B 33/03, C01B 33/113, H01M 4/36

(54) **NEGATIVE ELECTRODE ACTIVE MATERIAL AND METHOD FOR PRODUCING SAME**

(30) Priority: 11.10.2023 JP 2023176260
(71) Applicant: SHIN-ETSU CHEMICAL CO., LTD., Tokyo 100-0005 (JP)
(72) Inventor: HIROSE, Takakazu, Annaka-shi, Gunma 379-0125 (JP); TAKAHASHI, Kohta, Annaka-shi, Gunma 379-0125 (JP); OSAWA, Yusuke, Annaka-shi, Gunma 379-0125 (JP); KOIDE, Hiroyuki, Annaka-shi, Gunma 379-0125 (JP)
(74) Representative: Schicker, Silvia
(86) International application number: PCT/JP2024/035773
(87) International publication number: WO 2025/079551

(57) **Abstract**

The present invention is a negative electrode active material containing negative electrode active material particles, in which the negative electrode active material particles contain a porous carbon structure, a low-valent nano silicon oxide in an amorphous state is dispersed within the porous carbon structure, the low-valent nano silicon oxide includes states represented by SiOx where "x" is less than 1.0, and the low-valent nano silicon oxide has a particle size of 50 nm or less on average, the particle size being determined by image processing of a cross-sectional TEM image. This provides the negative electrode active material capable of increasing a capacity thereof while maintaining battery characteristics.

## Description

### TECHNICAL FIELD

The present invention relates to a negative electrode active material and a method for producing the same.

### BACKGROUND ART

In recent years, small electronic devices, represented by mobile terminals, have been widely used and urgently required to reduce the size and weight and to extend service lifetime. Such market requirements have advanced the development of particularly small and lightweight secondary batteries with higher energy density. These secondary batteries are considered to find application not only for small electronic devices but for large electronic devices, such as, typically, automobiles, as well as power storage systems such as, typically, houses.

Among those, lithium-ion secondary batteries are easy to reduce in size and increase the capacity, and have higher energy density than lead and nickel-cadmium batteries, receiving considerable attention.

The lithium-ion secondary battery described above has a positive electrode, a negative electrode, and a separator, along with an electrolytic solution. The negative electrode includes a negative electrode active material related to charge-and-discharge reactions.

A negative electrode active material, which is usually made of a carbon-based active material, is required to further improve the battery capacity for recent market requirements. The use of silicon as a negative electrode active material is considered to improve the battery capacity, for silicon has a theoretical capacity (4199 mAh/g) ten times or larger than graphite (372 mAh/g). Such material is thus expected to significantly improve the battery capacity. The development of silicon materials for use as negative electrode active materials includes not only silicon as a simple material but also alloys thereof and compounds thereof, typically oxides. The consideration of active material shapes ranges from a coated type, which is standard for a carbon-based active material, to an integrated type in which the materials are directly deposited on a current collector.

The use of silicon as a main material of a negative electrode active material, however, causes expansion and contraction of the negative electrode active material when charging or discharging, thereby making the negative electrode active material easy to break, particularly near a surface layer thereof. In addition, this negative electrode active material produces ionic substances in an interior thereof and is thus easy to break. The breakage of the surface layer of the negative electrode active material creates a new surface, increasing a reaction area of the active material. The new surface then causes the decomposition reaction of the electrolytic solution and is coated with a decomposition product of the electrolytic solution, thereby consuming the electrolytic solution. This makes cycle characteristics easy to reduce.

To improve initial efficiency and cycle characteristics of the battery, various investigations have been made so far on a negative electrode active material mainly containing the silicon material and an electrode structure for a lithium-ion secondary battery.

Specifically, for a purpose of obtaining good cycle characteristics and high safety, silicon and amorphous silicon dioxide are simultaneously deposited by using a vapor deposition method (for example, see Patent Document 1). To obtain a high battery capacity and safety, a carbon material (electron-conducting material) is provided on a surface layer of a silicon oxide particle (for example, see Patent Document 2). Furthermore, to improve the cycle characteristics and to obtain high input and output characteristics, an active material containing silicon and oxygen is produced to form an active material layer having a high oxygen ratio near a current collector (for example, see Patent Document 3). To improve the cycle characteristics, oxygen is contained in a silicon active material to form an active material layer so that an average oxygen content is 40 at% or less and so that an oxygen content is larger near a current collector (for example, see Patent Document 4).

To improve the first-cycle charge-and-discharge efficiency, a nano-composite having a Si phase, SiO₂, and a M_{y}O metal oxide is used (for example, see Patent Document 5). To improve the cycle characteristics, SiOₓ (0.8≤x≤1.5 and particle diameter range = 1 µm to 50 µm) and a carbon material are mixed, and the mixture is calcined at a high temperature (for example, see Patent Document 6). To improve the cycle characteristics, a mole ratio of oxygen to silicon in a negative electrode active material is set to 0.1 to 1.2, and the active material is regulated within a range that a difference of maximum value and minimum value in the mole ratio near an interface between the active material and a current collector is 0.4 or less (for example, see Patent Document 7). To improve battery load characteristics, metal oxide containing lithium is used (for example, see Patent Document 8). To improve the cycle characteristics, a hydrophobic layer such as a silane compound is formed on a surface layer of a silicon material (for example, see Patent Document 9).

To improve the cycle characteristics, silicon oxide is used, and a graphite coating is formed on a surface layer of the silicon oxide to impart conductivity (for example, see Patent Document 10). In Patent Document 10, regarding a shift value obtained by a RAMAN spectrum corresponding to the graphite coating, broad peaks appear at 1330 cm⁻¹ and 1580 cm⁻¹, and a strength ratio thereof I₁₃₃₀/I₁₅₈₀ is 1.5 < I₁₃₃₀/I₁₅₈₀ < 3. To achieve the high battery capacity and to improve the cycle characteristics, a particle having a silicon fine crystal phase dispersed in silicon dioxide is used (for example, see Patent Document 11). To improve overcharge-overdischarge characteristics, a silicon oxide in which an atomic ratio between silicon and oxygen is regulated to 1:y (0<y<2) is used (for example, see Patent Document 12).

As a lithium-ion secondary battery using silicon oxide, Hitachi Maxell, Ltd. started to ship a prismatic secondary battery for a smartphone that adopted a nano-silicon composite in June, 2010 (for example, see Non Patent Document 1). Silicon oxide proposed by Hohl is a composite material with Si⁰⁺ to Si⁴⁺, which has various oxidation states (Non Patent Document 2). Kapaklis proposes a disproportionation structure that is to be separated into Si and SiO₂ by applying thermal load to silicon oxide (Non Patent Document 3).

Miyachi et al. pay attention to Si and SiO₂, which contribute to charge-and-discharge, among the silicon oxides having the disproportionation structure (Non Patent Document 4), and Yamada et al. propose a formula of a reaction between the silicon oxide and Li as follows (Non Patent Document 5).

2SiO(Si+SiO₂) + 6.85Li⁺ + 6.85e⁻ → 1.4Li_{3.75}Si + 0.4Li₄SiO₄ + 0.2SiO₂

In the reaction formula, Si and SiO_{2,} constituting silicon oxide, react with Li to be separated into a Li silicide and a Li silicate, and partially unreacted SiO₂.

The generated Li silicate, which is an irreversible component, is generally supposed to be a stable substance that does not release Li once formed. A capacity per weight calculated from this reaction formula has a value close to an experimental value, and this reaction formula is recognized as a reaction mechanism of silicon oxide. Kim et al. identify the Li silicate, which is the irreversible component generated with charge-and-discharge of silicon oxide, as Li₄SiO₄ by using ⁷Li-MAS-NMR and ²⁹Si-MAS-NMR (Non Patent Document 6).

This irreversible capacity is the weakest point of silicon oxide, and improvement is required. Accordingly, Kim et al. produce a negative electrode, which has remarkably improved first-cycle efficiency as a battery and is practically usable, by using a Li pre-doping method to form the Li silicate in advance (Non Patent Document 7). Further, instead of employing a Li doping method on an electrode, a Li processing method using powder is also proposed, thereby achieving an improvement in an irreversible capacity (Patent Document 13).

On the other hand, Li metal used for Li doping exhibits significant price volatility depending on market conditions, posing various challenges when considered for industrial purposes. Accordingly, by employing CVD-Si-C, in which porous carbon is subjected to silane gas to form nano silicon in an interior of the porous carbon, a higher energy density is achieved than that of Li-doped SiO (Patent Documents 14 and 15).

### CITATION LIST

### PATENT LITERATURE

Patent Document 1: JP 2001-185127 A
Patent Document 2: JP 2002-042806 A
Patent Document 3: JP 2006-164954 A
Patent Document 4: JP 2006-114454 A
Patent Document 5: JP 2009-070825 A
Patent Document 6: JP 2008-282819 A
Patent Document 7: JP 2008-251369 A
Patent Document 8: JP 2008-177346 A
Patent Document 9: JP 2007-234255 A
Patent Document 10: JP 2009-212074 A
Patent Document 11: JP 2009-205950 A
Patent Document 12: JP H06-325765 A
Patent Document 13: JP 2015-156355 A
Patent Document 14: US 10,608,254 B2
Patent Document 15: US 11,165,054 B2

### NON PATENT LITERATURE

Non Patent Document 1: Battery Association of Japan, Newsletter "Denchi (battery)", May 1, 2010, p. 10
Non Patent Literature 2: A. Hohl, T. Wieder, P. A. van Aken, T. E. Weirich, G. Denninger, M. Vidal, S. Oswald, C. Deneke, J. Mayer, and H. Fuess : J. Non-Cryst. Solids, 320, (2003), 255.
Non Patent Literature 3: V. Kapaklis, J. Non-Crystalline Solids, 354 (2008) 612.
Non Patent Literature 4: Mariko Miyachi, Hironori Yamamoto, and Hidemasa Kawai, J. Electrochem. Soc. 2007 volume 154, issue 4, A376-A380
Non Patent Literature 5: M. Yamada, A. Inaba, A. Ueda, K. Matsumoto, T. Iwasaki, T. Ohzuku, J. Electrochem. Soc., 159, A1630 (2012)
Non Patent Literature 6: Taeahn Kim, Sangjin Park, and Seung M. Oh, J. Electrochem. Soc. volume 154, (2007), A1112-A1117.
Non Patent Literature 7: Hye Jin Kim, Sunghun Choi, Seung Jong Lee, Myung Won Seo, Jae Goo Lee, Erhan Deniz, Yong Ju Lee, Eun Kyung Kim, and Jang Wook Choi,. Nano Lett. 2016, 16, 282-288.
Non Patent Document 8: The Latest Development Trends on Lithium-ion Batteries for xEV, P96-111, CMC Publishing, November 27, 2020.

### SUMMARY OF INVENTION

### TECHNICAL PROBLEM

As described above, small electronic devices, represented by mobile terminals, have been advancing recently toward high performance and multifunctionality, and a lithium-ion secondary battery, which is the main electric source thereof, is required to increase battery capacity. As a method to solve this problem, it is desired to develop a lithium-ion secondary battery having a negative electrode using a silicon material as a main material.

Moreover, a lithium-ion secondary battery using a silicon material is desired to have initial charge-and-discharge characteristics and cycle characteristics almost equivalent to those of a lithium-ion secondary battery using a carbon-based active material. Thereupon, the cycle characteristics and the initial charge-and-discharge characteristics have been improved by using a negative electrode active material that is silicon oxide modified by insertion and partial extraction of Li. In recent years, an irreversible capacity, which is a disadvantage of the silicon oxide, has been reduced by using the silicon oxide as a main material, containing Li in advance to produce Li silicate. Such silicon oxide is actually beginning to be marketed. Even when Li-SiO-C, being silicon oxide reacted with Li (Non Patent Document 8), is used to completely replace a carbon negative electrode material to produce a prototype of a battery, the resulting improvement in capacity remains only in the upper 20% range compared with the carbon negative electrode material. This indicates that, in consideration of the performance enhancement of small electronic devices (such as 5G devices) and the increased driving range of electric vehicles, further improvement in the battery capacity is required.

Accordingly, CVD-Si-C having less irreversible capacity is developed; however, it has been known that fast charging performance and battery cycle characteristics are insufficient due to reaction between Si and an electrolytic solution.

The present invention has been made in view of the above problems. An object of the present invention is to provide a negative electrode active material capable of increasing capacity thereof while maintaining battery characteristics.

### SOLUTION TO PROBLEM

To achieve the object, the present invention provides a negative electrode active material containing negative electrode active material particles, wherein
the negative electrode active material particles contain a porous carbon structure,
a low-valent nano silicon oxide in an amorphous state is dispersed within the porous carbon structure,
the low-valent nano silicon oxide includes states represented by SiOx where "x" is less than 1.0, and
the low-valent nano silicon oxide has a particle size of 50 nm or less on average, the particle size being determined by image processing of a cross-sectional TEM image.

The inventive negative electrode active material contains the low-valent nano silicon oxide in the amorphous state, which is dispersed within the porous carbon structure; therefore, owing to the presence of the porous carbon structure, an adverse effect caused by expansion of the low-valent nano silicon oxide within the porous carbon structure can be mitigated. Further, although typical SiO contains Si⁴⁺ as an irreversible component, the states represented by SiOx where "x" is less than 1.0 are included in the inventive negative electrode active material, and a lower irreversible capacity compared with typical SiO can be maintained. Moreover, Si-O bonding can suppress decomposition of an electrolytic solution, which in turn can reduce SEI (Solid Electrolyte Interphase) that is deposited on a surface layer portion. Furthermore, with the particle size of the low-valent nano silicon oxide (the particle size being determined by image processing of a cross-sectional TEM image of the low-valent nano silicon oxide) being 50 nm or less on average, the Si-O bonds tend to be formed to an appropriate extent.

In this case, the low-valent nano silicon oxide is preferably in a substantially composite state of 0-valent, 1-valent, and 2-valent.

In this way, with the low-valent nano silicon oxide being substantially the composite state of 0-valent, 1-valent, and 2-valent, a lower irreversible capacity can be achieved.

Moreover, when the negative electrode active material particles are measured by solid-state ²⁹Si-MAS-NMR, hydrogen is preferably not detected in a vicinity of the low-valent nano silicon oxide.

In this way, with the negative electrode active material particles in which hydrogen is not detected in the vicinity of the low-valent nano silicon oxide when measured by solid-state ²⁹Si-MAS-NMR, the irreversible capacity can be further reduced.

Moreover, the low-valent nano silicon oxide dispersed in the porous carbon structure can have "x" that increases from a center toward a surface layer of the porous carbon structure.

In this way, in the present invention, since the low-valent nano silicon oxide is dispersed in the porous carbon structure, the porous carbon structure tends to have "x" that increases (oxygen composition ratio becomes higher) from the center toward the surface layer of the porous carbon structure during the production. Due to a high oxidation ratio on the surface, the decomposition of the electrolytic solution can be more effectively suppressed. Meanwhile, the oxidation ratio within the active material is lower, thereby enabling a further increase in battery capacity.

Further, the porous carbon structure preferably includes carbon-to-carbon double bonds in at least a portion thereof.

In this way, by providing the porous carbon structure having the carbon-to-carbon double bonds, the structure can be made rigid while retaining flexibility, thereby enabling more effective reduction of the adverse effects caused by the expansion of the low-valent nano silicon oxide in an interior of the structure.

Moreover, a proportion of the porous carbon structure within a whole of the negative electrode active material particles is preferably 38 mass% or more and 63 mass% or less.

With such a proportion, both securing the battery capacity and mitigating a volume change of the low-valent nano silicon oxide by the porous carbon structure can be effectively achieved.

Moreover, the low-valent nano silicon oxide preferably has a broad peak having a peak top around -87 ppm in a solid-state ²⁹Si-MAS-NMR measurement.

When the low-valent nano silicon oxide has such a peak, SiOx where "x" is less than 1.0 can be more reliably contained in this structure.

Moreover, a grain size of 0-valent Si constituting the low-valent nano silicon oxide is preferably in a range of 1 nm to 5 nm, in which the grain size is calculated using Scherrer's equation from a peak measured by X-ray diffraction measurement of the negative electrode active material particles.

It is preferable that the 0-valent Si has a grain size at which the Si is regarded as having a substantially amorphous structure.

Moreover, the negative electrode active material particles preferably have a ratio of G to D in a range from 0.85 to 1.15, and preferably have a ratio of Si to G of 0.25 or more and 0.5 or less, both obtained from a Raman spectrum.

When the ratio of G to D is in the above range, the negative electrode active material particles are neither too rigid nor too soft. When the ratio is within the above range, it is possible to prevent breakage of the particles during pressing, or to prevent breakage of the particles caused by a volume change of low-valent nano silicon due to Li occlusion. In addition, when the ratio of Si to G is in the above range, the area size of the low-valent nano silicon oxide portion visible on a particle surface is more appropriate. Within such a range, fast charging performance can be ensured while suppressing degradation.

Further, the porous carbon structure is preferably predominantly Type I according to the IUPAC classification, and preferably has a surface area of 1400 m²/g or more and a pore volume of 1 cm³/g or more.

With the porous carbon structure having such an IUPAC classification, the surface area, and the pore volume, the negative electrode active material can efficiently contain a large amount of the low-valent nano silicon oxide particles. In particular, the structure of type I according to the IUPAC classification facilitates the smooth formation of Si-O bonds after deposition.

Further, the present invention provides a method for producing a negative electrode active material containing negative electrode active material particles, the method comprising the steps of:
providing a porous carbon structure;
depositing silicon inside the porous carbon structure by introducing monosilane gas to the porous carbon structure while heating;
cooling a material in which silicon has been deposited within the porous carbon structure to 50°C or lower; and
after the cooling, in a state where a temperature of the material in which the silicon has been deposited within the porous carbon structure is adjusted so as to be maintained at 50°C or lower, converting at least a portion of the silicon into a low-valent nano silicon oxide by introducing oxygen diluted with nitrogen gas into the material in which the silicon has been deposited within the porous carbon structure,
whereby producing negative electrode active material particles in which a low-valent nano silicon oxide in an amorphous state is dispersed within the porous carbon structure.

With such a method for producing a negative electrode active material, as described above, the negative electrode active material containing the low-valent nano silicon oxide in the amorphous state, which is dispersed within the porous carbon structure, can be produced simply and efficiently.

### ADVANTAGEOUS EFFECTS OF INVENTION

The inventive negative electrode active material contains the low-valent nano silicon oxide in the amorphous state, which is dispersed within the porous carbon structure. Consequently, owing to the presence of the porous carbon structure, when the low-valent nano silicon oxide within the porous carbon structure is expanded, an adverse effect caused by the expansion can be mitigated. In addition, the states represented by SiOx where "x" is less than 1.0 are contained in the inventive negative electrode active material; consequently, a lower irreversible capacity compared with typical SiO can be maintained. Moreover, Si-O bonds can suppress decomposition of an electrolytic solution, which in turn can reduce SEI that is deposited on a surface layer portion. Furthermore, with the particle size of the low-valent nano silicon oxide (the particle size being determined by image processing of a cross-sectional TEM image of the low-valent nano silicon oxide) being 50 nm or less on average, the Si-O bonds tends to be formed to an appropriate extent. As a result, a negative electrode using the inventive negative electrode active material can obtain a high first-cycle efficiency, a high capacity, excellent input characteristics, and excellent cycle characteristics.

In addition, the inventive method for producing a negative electrode active material can produce a negative electrode active material containing the low-valent nano silicon oxide in the amorphous state, which is dispersed within the above porous carbon structure, simply and efficiently.

### BRIEF DESCRIPTION OF DRAWINGS

[FIG. 1] is a cross-sectional view illustrating a configuration of a negative electrode containing a negative electrode active material according to the present invention.
[FIG. 2] is an exploded view illustrating a configuration example of a lithium-ion secondary battery (laminate film type) that contains a negative electrode active material according to the present invention.
[FIG. 3] is a cross-sectional TEM image of an example of a negative electrode active material according to the present invention.
[FIG. 4] is a flowchart showing an example of a method for producing a negative electrode active material according to the present invention.
[FIG. 5] is a solid-state ²⁹Si-MAS-NMR measurement result of negative electrode active materials in Example 1 and those of each Control Example.
[FIG. 6] is a graph showing a change in a depth-profile measurement in an O 1s region in an XPS measurement of a negative electrode active material in Example 1.
[FIG. 7] is a graph showing a result of an XPS measurement of negative electrode active materials at a Si 2p region in Example 1, and Comparative Examples 1 and 3.
[FIG. 8] shows a ²⁹Si-MAS-NMR spectrum and a ²⁹Si-CP/MAS-NMR spectrum of an example of a negative electrode active material according to the present invention.
[FIG. 9] shows ¹³C-MAS-NMR spectra in Example 1 and Control Example.
[FIG. 10] shows a result of a TEM-EDX measurement of a negative electrode active material in Example 1. The upper part is a cross-sectional image indicating a measured location, and the lower part is a graph showing a relation between a distance from a material surface and mass% of each element.
[FIG. 11] shows X-ray diffraction spectra in Examples 1, 2, 15, and 16.
[FIG. 12] is a graph showing charge-and-discharge characteristics in Example 1, Comparative Example 1, and Example 11.
[FIG. 13] is a partly enlarged view of FIG. 12.

### DESCRIPTION OF EMBODIMENTS

Hereinafter, embodiments of the present invention will be described. However, the present invention is not limited thereto.

As described above, as a technique to increase battery capacity of a lithium-ion secondary battery, there have been investigations to use a negative electrode, in which a low-valent nano silicon oxide is used as a main material in a carbon structure, as a negative electrode for the lithium-ion secondary battery. The lithium-ion secondary battery using this active material is desired to have a high battery capacity while exhibiting battery characteristics almost equivalent to a lithium-ion secondary battery using a carbon-based active material.

The present inventors, therefore, have diligently investigated to obtain a negative electrode active material that can improve initial charge-and-discharge characteristics and increase battery capacity while obtaining excellent cycle characteristics when employed for a negative electrode of a secondary battery, and achieved the present invention.

In particular, CVD-Si-C, such as that disclosed in Patent Documents 14 and 15, has a problem of excessive reactivity with an electrolytic solution. In the present invention, in order to suppress such a reaction with the electrolytic solution, a Si segment is converted into a Si-O phase. By further employing siloxane bonds inherent to silicon oxide, the reaction and accompanying decomposition of the electrolytic solution can be significantly suppressed. In addition, the Si-O material having siloxane bonds has excellent Li acceptability. Thus, the development of a negative active material capable of ensuring fast charging is achieved.

### [Inventive Negative Electrode Active Material]

The inventive negative electrode active material is a negative electrode active material containing negative electrode active material particles, in which the negative electrode active material particles contain a porous carbon structure, a low-valent nano silicon oxide in an amorphous state is dispersed within the porous carbon structure, the low-valent nano silicon oxide includes states represented by SiOx where "x" is less than 1.0, and the low-valent nano silicon oxide has a particle size of 50 nm or less on average, the particle size being determined by image processing of a cross-sectional TEM image.

Such a negative electrode active material contains the low-valent nano silicon oxide in the amorphous state, which is dispersed within the porous carbon structure; therefore, owing to the presence of the porous carbon structure, an adverse effect caused by an expansion of the low-valent nano silicon oxide within the porous carbon structure can be mitigated. Further, the states represented by SiOx where "x" is less than 1.0 are included in the negative electrode active material, and a lower irreversible capacity compared with typical SiO can be maintained. Moreover, Si-O bonds can suppress decomposition of the electrolytic solution, which in turn can reduce the SEI (Solid Electrolyte Interphase) to be deposited on a surface layer portion. Furthermore, with the particle size of the low-valent nano silicon oxide (the particle size being determined by image processing of a cross-sectional TEM image of the low-valent nano silicon oxide) being 50 nm or less on average, the Si-O bonds tend to be formed to an appropriate extent. Note that in the present invention, the low-valent nano silicon oxide in an amorphous state is only required to be dispersed within the porous carbon structure, and a portion of the nano silicon oxide may have crystallinity.

That is, the inventive negative electrode active material has a Si-phase converted into Si-Ox having a siloxane bond for suppressing the decomposition reaction of the electrolytic solution that is unable to be sufficiently suppressed by CVD-Si-C generated from typical silane gas. However, since 4-valent Si constituting SiO becomes an irreversible component, by adjusting SiOx having a valence of 2 or fewer to be predominant, the irreversible capacity lower than that of the typical SiO can be maintained, although this irreversible capacity is larger than that of silicon alone. Moreover, the Si-O bonds can suppress decomposition of the electrolytic solution, which in turn can reduce the SEI that is deposited on the surface layer portion of CVD-Si-C. Since the moiety of this material that mainly contributes charge-and-discharge is the low-valent nano silicon oxide, the material can be defined as CVD-SiOx-C in contrast to CVD-Si-C. In this way, the active material produced is capable of having high energy density and fast charging performance while maintaining excellent cycle characteristics of a battery.

The grain size of the low-valent nano silicon oxide can be determined by TEM-EDX. Conditions therefor can be set as follows. The negative electrode active material is subjected to cross-sectional processing for both surfaces using a focused ion beam (FIB) processing apparatus under non-exposure conditions to the atmosphere. XVision200DB manufactured by SIINT Inc. is used as the FIB processing apparatus, and an acceleration voltage applied is set to 30 kV. The TEM observation is performed by using Tecnai G2 F20 manufactured by FEI Company, and an acceleration voltage is set to 200 kV. An r-TEM manufactured by EDAX Corporation is used for EDX, and an acceleration voltage is set to 200 kV.

In the present invention, as described above, the low-valent nano silicon oxide substantially has a grain of 50 nm or less. The structure of the low-valent nano silicon oxide preferably contains a 1-valent or 2-valent oxidized compound. The Si-O bonds can serve to suppress the decomposition of the electrolytic solution. In addition, the low-valent nano silicon oxide exhibits high Li diffusivity and is suitable for fast charging. When the grain size exceeds 50 nm, the formation of the Si-O bonding becomes difficult. For example, when only the grain surface is oxidized to form SiO₂, which serves as a resistive component and fails to ensure fast charging performance.

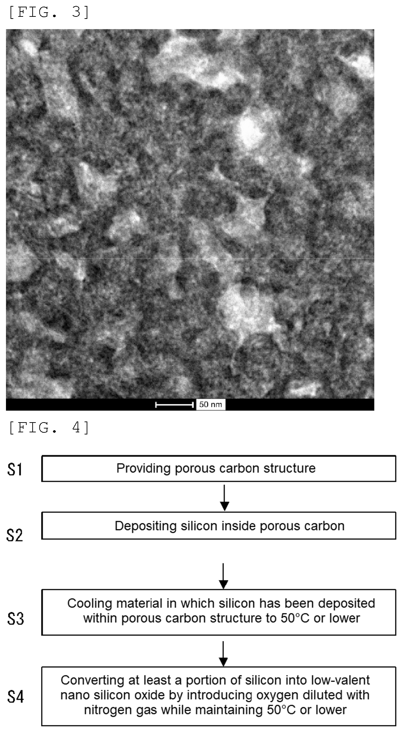

FIG. 3 shows a cross-sectional TEM image of an example of the inventive negative electrode active material. The areas observed as white are the low-valent nano silicon oxide, having an average particle size of 50 nm or less.

When the particle size of the low-valent nano silicon oxide increases, Si-O bonding becomes difficult to form. As described later, in the inventive method for producing a negative electrode active material, specifically, during a process of decomposing SiH₄ to produce the amorphous Si, Si is intentionally reacted with oxygen to produce the Si-O bonds. Consequently, when the particle size is large, an infiltration property of oxygen is poor. For example, a concentration distribution of oxygen is generated within the low-valent silicon oxide phase, and the silicon oxide phase may be converted into SiO₂. Alternatively, in this case, an interior of the phase may be in a state of silicon as in CVD-Si-C described above. In addition, 0-valent amorphous Si is partially present within this low-valent nano silicon oxide grain, and it is desirable that the crystallinity of the amorphous Si is lower. When the crystallinity thereof is lowered, this increases the irreversible capacity; however, an advantage is provided in which Li acceptability is improved. When the crystallinity is high, the decomposition reaction of the electrolytic solution inherent to Si is facilitated, resulting in degradation of the cycle characteristics.

In the inventive negative electrode active material, a grain size of 0-valent Si constituting the low-valent nano silicon oxide is preferably in a range of 1 nm to 5 nm, in which the grain size is calculated using Scherrer's equation from a peak measured by X-ray diffraction measurement of the negative electrode active material particles. It is preferable that the 0-valent Si has a grain size at which the Si is regarded as having a substantially amorphous structure.

The calculation of the crystallite size by XRD can be performed under, for example, the following conditions. In the case of a broad peak, an analysis software TOPAS can be used under, for example, the following conditions.

### XRD Measurement

· Apparatus: D2 PHASER manufactured by Bruker Corporation
· X-ray Source: Cu
· Divergence Slit: 0.5°
· Incident Side Soller: 4°
· Receiving Side Soller: 4°

### Calculation of Crystallite Size

· Analysis software: DIFFRAC.TOPAS
· Method of Analysis: Peak-fitting Method
· Emission Profile: CuKa5.lam
· Function: FP (First Principle) Function
· Refinement Option: "Calculate Error" and "Use Extrapolation" are selected.

Moreover, in the inventive negative electrode active material, the low-valent nano silicon oxide is preferably in a substantially composite state of 0-valent, 1-valent, and 2-valent. In this way, with the low-valent nano silicon oxide being substantially the composite state of 0-valent, 1-valent, and 2-valent, the lower irreversible capacity can be achieved.

The inventive negative electrode active material contains a low-valent nano silicon oxide phase within a porous carbon material, and a ratio of silicon to oxygen in SiOx, constituting this low valent silicon compound, is preferably 0.7 or less. In addition, the 1-valent and 2-valent compounds are predominant in the low-valent nano silicon oxide, and the low-valent nano silicon oxide phase, being present within the porous structure, may contain a microcrystal phase of 0-valent Si.

The valence of the low-valent nano silicon oxide can be quantified by NMR (nuclear magnetic resonance) and XPS (X-ray photoelectron spectroscopy).

The NMR measurement can be performed under the following conditions, for example.

### ²⁹Si MAS NMR (Magic Angle Spinning-Nuclear Magnetic Resonance)

· Apparatus: 700-NMR spectroscope manufactured by Bruker Corporation,
· Probe: 4-mm HR-MAS rotor, 50 µL,
· Sample Spinning Speed: 10 kHz,
· Measurement Environment Temperature: 25°C.

The XPS measurement can be performed under the following conditions, for example.

### XPS

· Apparatus: X-ray photoelectron spectrometer,
· X-ray Source: Monochromatic Al Kα ray,
· X-ray Spot Diameter: 100 µm,
· Ar-ion Gun Sputtering Conditions: 0.5 kV 2 mm×2 mm.

Moreover, in the inventive negative electrode active material, when the negative electrode active material particles are measured by solid-state ²⁹Si-MAS-NMR, hydrogen is preferably not detected in a vicinity of the low-valent nano silicon oxide. This is because the high-valence portion tends to develop the irreversible capacity when hydrogen is incorporated as a defect. With the negative electrode active material particles in which hydrogen is not detected in the vicinity of the low-valent nano silicon oxide when measured by solid-state ²⁹Si-MAS-NMR, the irreversible capacity can be further reduced. In the inventive negative electrode active material, the low-valent portion is considered to have an amorphous structure containing hydrogen.

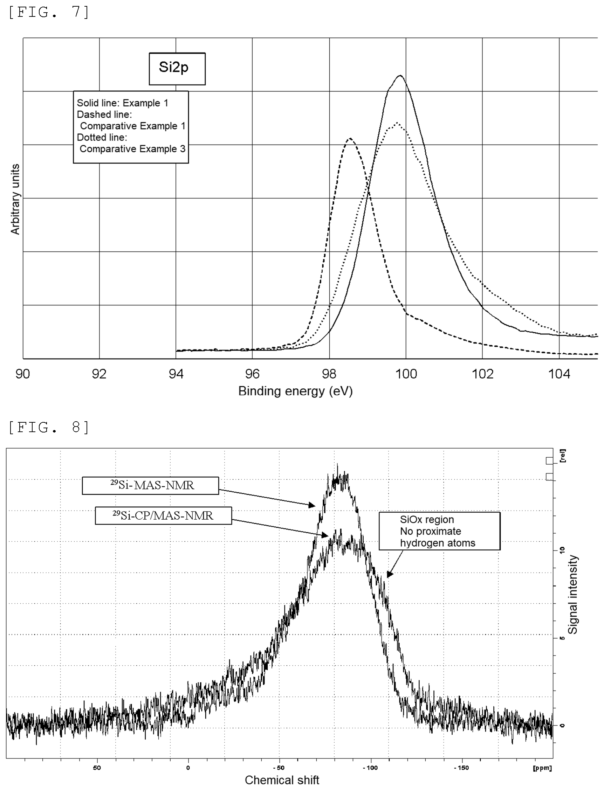

FIG. 8 shows the result of a solid-state ²⁹Si-MAS-NMR measurement and the result of a ²⁹Si-CP/MAS-NMR measurement of an example of the inventive negative electrode active material. The low-valent nano silicon oxide exhibits a broad peak having a peak top around -87 ppm in the solid-state ²⁹Si-MAS-NMR measurement. In contrast, in the ²⁹Si-CP/MAS-NMR measurement, the peak width is slightly narrower, and a region having the highest magnetic field is not detected by the CP/MAS method. This region can be referred to as a SiOx structure in which no hydrogen (H) atoms are present in the vicinity of the region (when the CP method is employed, the atoms are detected by transferring magnetization from ¹H nuclei to ²⁹Si nuclei; accordingly, the ²⁹Si nuclei having no ¹H nuclei in the vicinity are not detected). Although the low-valent side region contains much amorphous Si, this Si is detected by the CP/MAS method due to ¹H, which is present in the vicinity of Si.

Moreover, in the inventive negative electrode active material, the low-valent nano silicon oxide preferably has a broad peak having a peak top around -87 ppm in the solid-state ²⁹Si-MAS-NMR measurement as shown in FIG. 8. When the low-valent nano silicon oxide has such a peak, SiOx where "x" is less than 1.0 can be more reliably contained in this structure.

Moreover, in the present invention, the low-valent nano silicon oxide dispersed in the porous carbon structure preferably has "x" that increases from a center toward a surface layer of the porous carbon structure. In the present invention, since the low-valent nano silicon oxide is dispersed in the porous carbon structure, the porous carbon structure tends to have "x" that increases (oxygen composition ratio becomes higher) from the center toward the surface layer of the porous carbon structure during the production. Due to a high oxidation ratio of silicon on the surface, the decomposition of the electrolytic solution can be more effectively suppressed. Meanwhile, the oxidation ratio of silicon within the active material is lower, thereby enabling a further increase in the battery capacity.

Further, in the inventive negative electrode active material, the porous carbon structure preferably includes carbon-to-carbon double bonds in at least a portion thereof. The porous carbon structure having the carbon-to-carbon double bonds can make the structure rigid while retaining flexibility, thereby enabling more effective reduction of the adverse effects caused by the expansion of the low-valent nano silicon oxide inside the structure during the expansion. Regarding the porous carbon structure, although the structure being commercially available can be used, it is preferable to select a structure appropriate for the porous carbon structure. In the inventive negative electrode active material, it is possible to confirm that the porous carbon structure contains the carbon-to-carbon double bonds from the ¹³C-MAS-NMR spectrum. Note that the porous carbon structure is preferably rigid while retaining flexibility, and thus preferably contains no SiC.

Moreover, the negative electrode active material particles preferably have a ratio of G to D in a range from 0.85 to 1.15, and preferably have a ratio of Si to G of 0.25 or more and 0.5 or less, both obtained from a Raman spectrum. The ratio of G to D refers to a ratio of IG to ID obtained by Raman spectrometry, in which a G band peak intensity IG is attributed to a peak intensity of the G band, and a D band peak intensity ID is a peak intensity attributed to the D band. The ratio of Si to G refers to an intensity ratio of ISi to IG obtained by Raman spectrometry, in which a Si peak intensity ISi is attributed to Si, and a G band peak intensity IG is attributed to the G band.

Excessively hard carbon particles cause breakage during pressing, whereas those that are too soft break due to the expansion of silicon when Li is occluded therein; accordingly, there is an optimal hardness range therefor. Further, when the area of low-valent silicon oxide portions visible on the particle surface is large, the reaction area with the electrolytic solution increases, resulting in a tendency to relatively rapid degradation. Conversely, when this area is narrow, the Li-accepting sites become smaller, thereby deteriorating fast-charging performance. As an indicator therefor, there is an optimal value for the ratio of Si to G. That is, when the ratio of G to D is in the above range, the negative electrode active material particles are neither too rigid nor too soft. When the ratio is within the above range, it is possible to prevent breakage of the particles during pressing, or to prevent breakage of the particles caused by a volume change of low-valent nano silicon due to Li occlusion. In addition, when the ratio of Si to G is in the above range, the area size of the low-valent nano silicon oxide portion visible on a particle surface is more appropriate. Within such a range, the fast charging performance can be ensured while suppressing degradation.

### <Negative Electrode for Non-aqueous Electrolyte Secondary Battery>

Next, a configuration of a negative electrode for a non-aqueous electrolyte secondary battery containing the inventive negative electrode active material (hereinafter, also referred to as "negative electrode") will be described.

### [Configuration of Negative Electrode]

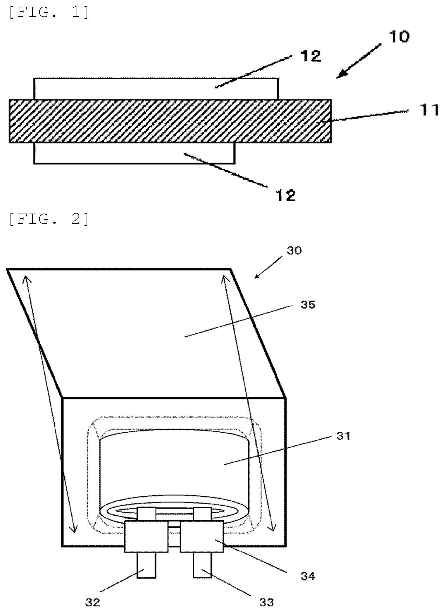

FIG. 1 shows a sectional view of a negative electrode containing the inventive negative electrode active material. As shown in FIG. 1, a negative electrode 10 is configured to have a negative electrode active material layer 12 on a negative electrode current collector 11. This negative electrode active material layer 12 may be provided on both sides or only one side of the negative electrode current collector 11. Furthermore, in the electrode for a non-aqueous electrolyte secondary battery according to the present invention, the negative electrode current collector 11 is not essential.

### [Negative Electrode Current Collector]

The negative electrode current collector 11 is made of a highly electrically conductive and mechanically strong material. Examples of the electrically conductive materials usable for the negative electrode current collector 11 include copper (Cu) and nickel (Ni). This electrically conductive material is preferably a material that does not form an intermetallic compound with lithium (Li).

The negative electrode current collector 11 preferably contains carbon (C) and sulfur (S), besides the main element, because these elements improve the physical strength of the negative electrode current collector. In particular, when an active material layer that expands during charging is disposed, the current collector containing the above elements has an effect of suppressing deformation of the electrode, including the current collector. The content of the contained elements, which are described above, is not particularly limited, but among them, each of the contents is preferably 100 mass ppm or less. This is because a higher effect of suppressing deformation is obtained. Such an effect of suppressing deformation enables further improvement of the cycle characteristics.

Further, the surface of the negative electrode current collector 11 is preferably roughened, and desirably, a ten-point mean roughness Rz may be 1.5 µm or more and 5 µm or less. Examples of the roughened negative electrode current collectors include a metallic foil subjected to an electrolyzing process, embossing process, chemical etching process, etc.

### [Negative Electrode Active Material Layer]

The negative electrode active material layer 12 may contain multiple types of negative electrode active materials, such as a carbon-based active material, besides the silicon-based active material particles. Depending on battery design, other materials may be further contained, such as a thickener (also referred to as a "binding agent" or "binder"), a conductive assistant agent, etc.

### [Method for Producing Negative Electrode Active Material and Negative Electrode]

Next, an example of a method for producing a negative electrode active material and a negative electrode using this active material for a non-aqueous electrolyte secondary battery according to the present invention will be described.

First, the method for producing a negative electrode active material contained in the negative electrode will be described. The inventive method for producing a negative electrode active material is a method for producing a negative electrode active material containing negative electrode active material particles, the method includes the steps of providing a porous carbon structure, depositing silicon inside the porous carbon structure by introducing monosilane gas to the porous carbon structure while heating, cooling a material in which silicon has been deposited within the porous carbon structure to 50°C or lower, and after the cooling, in a state where a temperature of the material in which the silicon has been deposited within the porous carbon structure is adjusted so as to be maintained at 50°C or lower, converting at least a portion of the silicon into a low-valent nano silicon oxide by introducing oxygen diluted with nitrogen gas into the material in which the silicon has been deposited within the porous carbon structure, whereby producing negative electrode active material particles in which the low-valent nano silicon oxide in an amorphous state is dispersed within the porous carbon structure.

With reference to Steps S1 to S4 in FIG. 4, each step of the method for producing a negative electrode active material will be described.

First, a porous carbon structure is provided (Step 1). The porous carbon structure provided here preferably includes carbon-to-carbon double bonds in at least a portion thereof. Moreover, the porous carbon structure provided here is preferably predominantly of Type I according to the IUPAC classification, and preferably has a surface area of 1400 m²/g or more and a pore volume of 1 cm³/g or more. By classifying according to the IUPAC classification, and by providing the surface area and the pore volume, the deposition of silicon can be performed in a larger amount with higher efficiency. Moreover, the IUPAC classification, the surface area, and the pore volume can be measured by the following method.
·Specific surface area and pore size distribution are measured using TriStar II Plus, manufactured by Shimadzu Corporation, by a constant-volume method based on a gas adsorption method. The measurement conditions are as follows.
·Gas used: nitrogen
·Environment: under liquid nitrogen
·Pressure operating range: P/P0
·Adsorption 0 to 0.998
·Desorption 0.998 to 0.10
·Pretreatment vacuum, 200°C, 1 hour

Next, by introducing monosilane gas to the porous carbon structure provided in Step S1 while heating, silicon is deposited inside the porous carbon structure (Step S2).

Note that after Step 1 and before Step 2, the porous carbon structure is preferably loaded in a vacuum container to be subjected to vacuuming. The vacuuming can be performed up to a degree of vacuum, e.g., approximately -100 kPa, but is not limited to this degree. Further, subsequent to vacuuming, it is preferable to restore pressure with nitrogen and heat the porous carbon structure until approximately 350 to 450°C using an external heater while introducing nitrogen. This heating can be performed for 5 minutes to 1 hour. By subjecting the porous carbon structure to such vacuuming and preheating in the presence of nitrogen, nuclei formation for silicon deposition in Step S2 is achieved, and removal of hydrogen and water adhered to the porous carbon structure is also achieved, thereby enabling more reliable silicon deposition in Step S2.

The silicon deposition in Step S2 can be performed, for example, by introducing monosilane gas at approximately 400°C to 500°C. The deposition time can be set, for example, to 30 minutes to 10 hours.

Next, the material in which silicon has been deposited within the porous carbon structure is cooled to 50°C or below (Step S3). In this step, it is preferable to cool the material while introducing nitrogen gas, for example. In this cooling process, the material can be cooled, for example, to room temperature.

After the above cooling (Step S3), in a state that is adjusted such that the temperature of the material with silicon that has been deposited inside the porous carbon structure is maintained at 50°C or lower, the material with silicon that has been deposited inside the porous carbon structure is subjected to the introduction of oxygen diluted with nitrogen. As a result, at least a portion of silicon is converted into the low-valent nano silicon oxide (Step S4). Through this step, the Si-O bonds can be formed. Note that the temperature maintained here is more preferably at 35°C or lower.

The oxygen dilution by nitrogen can be, for example, 5 to 50-fold, and is preferably 10 to 30-fold. This dilution thereof can typically be 20-fold.

Further, in Step S4, when the temperature within the material rises and exceeds 50°C, silicon dioxide is partially generated, which is not preferable as the negative electrode active material. Accordingly, in Step 4, the temperature of the material is required to be adjusted such that the temperature is maintained at 50°C or lower. In addition, in order to facilitate the oxidation reaction to promote the formation of the Si-O bonds, it is preferable that the temperature of the material in Step S4 is, for example, 25°C or higher, and more preferably 30°C or higher.

An oxidation time (time for introducing oxygen diluted with nitrogen gas) in this Step S4 can be, for example, set to 30 minutes or more and 5 hours or less, and is preferably 1 hour or more and 3 hours or less. Further, after introducing oxygen diluted with nitrogen gas, the material can be further cooled by switching to the introduction of nitrogen gas. The introduction time of nitrogen gas alone can be set to, for example, 30 minutes or more and 2 hours or less.

In the oxidation by introducing oxygen diluted with nitrogen gas as described above, it is preferable to adjust the low-valent nano silicon oxide dispersed inside the porous carbon structure such that "x" increases from the center toward the surface layer of the porous carbon structure. Note that in the porous carbon structure, the pore structure has a tendency in which the cross-sectional area thereof is larger on the particle surface and the cross-sectional area thereof becomes smaller toward the particle interior. Consequently, by oxidizing with the introduction of oxygen diluted with nitrogen gas, as in the present invention, "x" naturally tends to increase from the center toward the surface layer of the porous carbon structure.

Thereafter, the material is taken out of the container. Through the above steps, the negative electrode active material particles, in which the low-valent nano silicon oxide in an amorphous state is dispersed within the porous carbon structure, can be produced.

When producing the negative electrode active material in this way, it is preferable to adjust the amount of deposited silicon and the degree of oxidation so that a proportion of the porous carbon structure within a whole of the negative electrode active material particles is 38 mass% or more and 63 mass% or less.

### <Lithium-ion Secondary Battery>

Next, a lithium-ion secondary battery of a laminate film type will be described as a concrete example of the non-aqueous electrolyte secondary battery that employs the inventive negative electrode active material described above.

### [Configuration of Laminate Film Type Secondary Battery]

A laminate film type lithium-ion secondary battery 30 shown in FIG. 2 mainly includes a wound electrode body 31 stored in a sheet-shaped exterior member 35. This wound electrode body 31 is formed by winding a positive electrode, a negative electrode, and a separator disposed between these electrodes. There is also a case of storing a laminate having a separator disposed between a positive electrode and a negative electrode. The electrode bodies of both types have a positive-electrode lead 32 attached to the positive electrode and a negative-electrode lead 33 attached to the negative electrode. The outermost circumference of the electrode bodies is protected by a protecting tape.

The positive-electrode leads 32 and the negative-electrode 33, for example, extend from the interior of the exterior member 35 toward the exterior in one direction. The positive-electrode lead 32 is made of, for example, a conductive material, such as aluminum, and the negative-electrode lead 33 is made of, for example, a conductive material, such as nickel or copper.

The exterior member 35 is, for example, a laminate film having a fusion-bond layer, a metallic layer, and a surface protecting layer laminated in this order. The laminate films are fusion-bonded or stuck with an adhesive or the like at the outer edges therebetween of the fusion-bond layers of two films such that each fusion-bond layer faces the electrode body 31. The fusion-bond portion is, for example, a film, such as a polyethylene or polypropylene film. The metallic portion is aluminum foil, etc. The protecting layer is, for example, nylon, etc.

In the space between the exterior member 35 and the positive and negative electrode leads, a close adhesion film 34 is inserted to prevent air from entering therein. Exemplary materials of the close adhesion film include polyethylene, polypropylene, and polyolefin resins.

The positive electrode has a positive electrode active material layer disposed on one side or both sides of a positive electrode current collector, like the negative electrode 10 shown in FIG. 1, for example.

The positive electrode current collector is made of, for example, a conductive material, such as aluminum.

The positive electrode active material layer contains any one or more positive electrode materials, in which lithium ions can be occluded and released, and may contain other materials such as a positive electrode binding agent, positive electrode conductive assistant agent, or dispersant, depending on a design. In this case, the details of the positive electrode binding agent and the positive electrode conductive assistant agent are the same as those of the negative electrode binding agent and the negative electrode conductive assistant agent, which have already been described, for example.

The positive electrode material is desirably a compound containing lithium. Examples of lithium-containing compounds include complex oxides composed of lithium and a transition metal element, or phosphate compounds containing lithium and a transition metal element. Among these positive electrode materials, a compound containing at least one of nickel, iron, manganese, and cobalt is preferable. The chemical formula of such compounds is expressed by, for example, LiₓM₁O₂ or Li_{y}M₂PO₄. In the formulae, M₁ and M₂ represent at least one of the transition metal elements. "x" and "y" represent a value varied depending on a charging or discharging status of a battery, which is typically shown as 0.05≤x≤1.10 and 0.05≤y≤1.10.

Examples of the complex oxides containing lithium and a transition metal element include a lithium cobalt complex oxide (LiₓCoO₂), a lithium nickel complex oxide (LiₓNiO₂), a lithium-nickel-cobalt complex oxide, etc. Examples of the lithium-nickel-cobalt complex oxide include lithium-nickel-cobalt-aluminum complex oxide (NCA), lithium-nickel-cobalt-manganese complex oxide (NCM), etc.

Examples of the phosphate compounds containing lithium and a transition metal element include a lithium-iron-phosphate compound (LiFePO₄), a lithium-iron-manganese-phosphate compound (LiFe₁₋ᵤMnᵤPO₄ (0<u<1), etc. Not only higher battery capacity, but also excellent cycle characteristics can be obtained by using these positive electrode materials.

### [Negative Electrode]

The negative electrode has a configuration that is similar to that of the above negative electrode 10 for a lithium-ion secondary battery shown in FIG. 1, and, for example, has the negative electrode active material layers disposed on both faces of the current collector. This negative electrode preferably has a negative-electrode charge capacity larger than an electrical capacitance (battery charge capacity) provided by the positive electrode active material agent. Consequently, precipitation of lithium metal can be suppressed on the negative electrode.

The positive electrode active material layer is provided partially on both surfaces of the positive electrode current collector. Similarly, the negative electrode active material layer is also provided partially on both surfaces of the negative electrode current collector. In this case, the negative electrode active material layer provided on the negative electrode current collector, for example, has a region that does not face any positive electrode active material layer. This is intended to perform a stable battery design.

The region described above, where the negative electrode active material layer and positive electrode active material layer do not face one another, is hardly affected by charging and discharging. The state of the negative electrode active material layer is consequently retained immediately after forming intact. This enables reproducibly high-precision investigation of, for example, the composition of the negative electrode active material without relying on the presence or absence of charging and discharging.

### [Separator]

The separator separates the positive electrode and the negative electrode, prevents current short-circuit due to contact between these electrodes, and passes lithium ions therethrough. This separator may be made of, for example, a porous film of synthetic resin or ceramic, or two or more laminated porous films to have a laminate structure. Examples of synthetic resin include polytetrafluoroethylene, polypropylene, polyethylene, etc.

### [Electrolytic Solution]

At least a part of the active material layers or the separator is impregnated with an electrolyte in liquid form (electrolytic solution). This electrolytic solution includes electrolyte salt dissolved in a solvent and may contain other materials such as additives.

The solvent to be used can be, for example, a non-aqueous solvent. Examples of the non-aqueous solvents include ethylene carbonate, propylene carbonate, butylene carbonate, dimethyl carbonate, diethyl carbonate, ethylmethyl carbonate, methylpropyl carbonate, 1,2-dimethoxyethane, tetrahydrofuran, etc. Among these, at least one or more ethylene carbonate, propylene carbonate, dimethyl carbonate, diethyl carbonate, or ethylmethyl carbonate are desirably used because such solvents enable better characteristics. In this case, superior characteristics can be obtained by the combined use of a high-viscosity solvent, such as ethylene carbonate or propylene carbonate, and a low-viscosity solvent, such as dimethyl carbonate, ethylmethyl carbonate, or diethyl carbonate. This results from the improvement of the dissociation of the electrolyte salt and ionic mobility.

When an alloy-based negative electrode is employed, in particular, the solvent desirably contains at least any one of the halogenated chain carbonate ester or halogenated cyclic carbonate ester. Thus, a stable coating is formed on the negative electrode active material surface to be formed with a stable coating at charging and discharging, particularly during charging. The halogenated chain carbonate ester is a chain carbonate ester having halogen as a constituent element (at least one hydrogen is substituted by halogen). In addition, the halogenated cyclic carbonate ester is a cyclic carbonate ester having halogen as a constituent element (that is, at least one hydrogen is substituted by halogen).

The halogen type is not particularly limited, but is preferably fluorine, for fluorine enables the formation of a better coating than other halogens. A larger number of halogens is desirable, for a coating obtained is more stable, and a decomposition reaction of the electrolytic solution is suppressed.

Examples of the halogenated chain carbonate ester include fluoromethyl methyl carbonate and difluoromethyl methyl carbonate. Examples of the halogenated cyclic carbonate ester include 4-fluoro-1,3-dioxolane-2-one and 4,5-difluoro-1,3-dioxolane-2-one.

The solvent additive preferably contains an unsaturated carbon bond cyclic carbonate ester, for this ester is capable of forming a stable coating on the negative electrode surface when charging and discharging, and suppressing the decomposition reaction of the electrolytic solution. Examples of the unsaturated carbon bond cyclic carbonate ester include vinylene carbonate and vinyl ethylene carbonate.

In addition, the solvent additive preferably contains sultone (cyclic sulfonic acid ester) because this improves chemical stability of a battery. Examples of the sultone include propane sultone and propene sultone.

In addition, the solvent preferably contains an acid anhydride because this improves chemical stability of the electrolytic solution. An example of the acid anhydride includes propane disulfonic acid anhydride.

The electrolyte salt can contain, for example, any one or more light metal salts, such as lithium salt. Examples of the lithium salt include lithium hexafluorophosphate (LiPF₆), lithium tetrafluoroborate (LiBF₄), etc.

The content of the electrolyte salt relative to the solvent is preferably 0.5 mol/kg or more and 2.5 mol/kg or less. This is because high ionic conductivity is obtained.

### EXAMPLES

Hereinafter, the present invention will be specifically described with reference to Examples and Comparative Examples. However, the present invention is not limited to these Examples.

### (Example 1)

Through procedures below, a negative electrode active material was produced, and further, a laminate film type lithium-ion secondary battery 30 shown in FIG. 2 was produced.

The negative electrode active material was produced as follows. First, a porous carbon material (porous carbon structure) of Type I according to the IUPAC classification was provided, the material having a surface area (BET specific surface area) of 2483 m²/g, a pore volume of 1.35 cm³/g, and a particle size (D50) of 11 µm. This porous carbon material was loaded into a vacuum container and then subjected to vacuuming up to - 90 kPa. Next, the container was restored to atmospheric pressure with nitrogen, and the interior of the container was heated to 400°C using an external heater while introducing nitrogen. After heating for 30 minutes, the temperature was raised to 415°C, and monosilane gas was introduced for deposition for 4 hours. Subsequently, the temperature was lowered to room temperature while introducing nitrogen gas. After lowering the temperature to 25°C, oxygen diluted 20-fold with nitrogen was introduced, and this was adjusted such that the temperature of the material was maintained at 50°C or less, thereby forming Si-O bonds. Next, when the temperature of the material was lowered to 30°C or less by introducing oxygen diluted with nitrogen for 2 hours, the diluted oxygen was switched to nitrogen gas, which was then introduced for 60 minutes. Thereafter, the material was taken out of the container and obtained as a negative electrode active material.

### [Measurement of Negative Electrode Active Material]

The negative electrode active material produced as shown above was subjected to TEM-EDX, XRD analysis, NMR analysis, and Raman spectrometry.

### [Production of Negative Electrode]

The negative electrode active material (active material containing CVD-SiOx-C) produced as described above, graphite, a conductive assistant agent 1 (carbon nanotube, CNT), a conductive assistant agent 2 (carbon fine particles having a median diameter of approximately 50 nm), sodium polyacrylate, and carboxymethylcellulose (hereinafter, referred to as CMC) were mixed at a dry mass ratio of 9.3 : 83.7 : 1 : 1 : 4 : 1. Then the mixture was diluted with pure water to form a negative electrode mixture slurry.

In addition, as a negative electrode current collector, an electrolytic copper foil having a thickness of 15 µm was used. This electrolytic copper foil contained carbon and sulfur at each concentration of 70 ppm by mass. Finally, the negative electrode mixture slurry was applied onto the negative electrode current collector and dried in a vacuum atmosphere at 100°C for one hour. After drying, an amount of the deposited negative electrode active material layer per unit area (also referred to as an area density) on one surface of the negative electrode was 7.0 mg/cm².

### [Assembling Coin Battery for Testing]

Subsequently, solvent ethylene carbonate (EC) and dimethyl carbonate (DMC) were mixed, followed by dissolving an electrolyte salt (lithium hexafluorophosphate: LiPF₆) to prepare an electrolytic solution. In this case, the solvent composition was set to EC : DMC = 30 : 70 in a volume ratio, and the content of the electrolyte salt was set to 1 mol/kg relative to the solvent. As an additive, vinylene carbonate (VC) and fluoroethylene carbonate (FEC) were added at 1.0 mass% and 2.0 mass%, respectively.

Next, coin batteries were assembled as follows. First, Li foils having a thickness of 1 mm were punched into a piece having a diameter of 16 mm, and the piece was attached to aluminum clads.

Then, the negative electrodes obtained beforehand were punched into a piece having a diameter of 15 mm, the piece was faced with the Li foils attached to the aluminum clads via separators, and after electrolytic solution injection, 2032 coin batteries were produced.

### [Measurement of First-Cycle Efficiency]

First-cycle efficiency was measured under the following conditions. First, for the produced coin batteries for the first-cycle efficiency test, the charging (first charge) was performed in CCCV mode at a charge rate corresponding to 0.03 C. The CV was 0 V, and the termination current was set to 0.04 mA. Then, CC discharge (first discharge) was performed by making the discharge rate at 0.03 C as well, and a discharge termination voltage of 1.2 V.

To investigate initial charge-and-discharge characteristics, the first-cycle efficiency (hereinafter, may be referred to as initial efficiency) was calculated. The first-cycle efficiency was calculated from the equation shown by First-cycle Efficiency (%) = (First-cycle Discharge Capacity / First-cycle Charge Capacity) × 100.

### [Production of Lithium-ion Secondary Battery and Battery Evaluation]

From the obtained initial data, a counter-positive electrode was designed to achieve a utilization ratio of 95% for a negative electrode. Based on the following equation, the utilization ratio was calculated from positive and negative electrode capacities obtained with Li of a counter electrode. 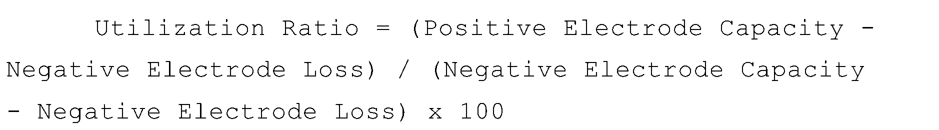 Utilization Ratio = (Positive Electrode Capacity - Negative Electrode Loss) / (Negative Electrode Capacity - Negative Electrode Loss) x 100

Each lithium-ion secondary battery of Examples and Comparative Examples (lithium-ion secondary batteries as shown in FIG. 2) was produced based on this design. Each lithium-ion secondary battery of Examples and Comparative Examples was subjected to battery evaluation.

The cycle characteristics were investigated as follows. First, for battery stabilization, two cycles of charging and discharging were performed at 0.2 C under an atmosphere of 25°C, and the discharge capacity at the second cycle was measured. The battery cycle characteristics started from the discharge capacity at the third cycle were calculated, and the battery test was stopped at 1000 cycles. The charging and discharging were performed at a charging rate of 0.7 C and a discharging rate of 0.5 C. The charge voltage was 4.3 V, the discharge termination voltage was 2.5 V, and the charge termination rate was 0.07 C.

Table 1 shows the results of each measurement. Table 1 also collectively shows the results from Comparative Examples 1 to 3, and Examples 2 to 17, which are described later.

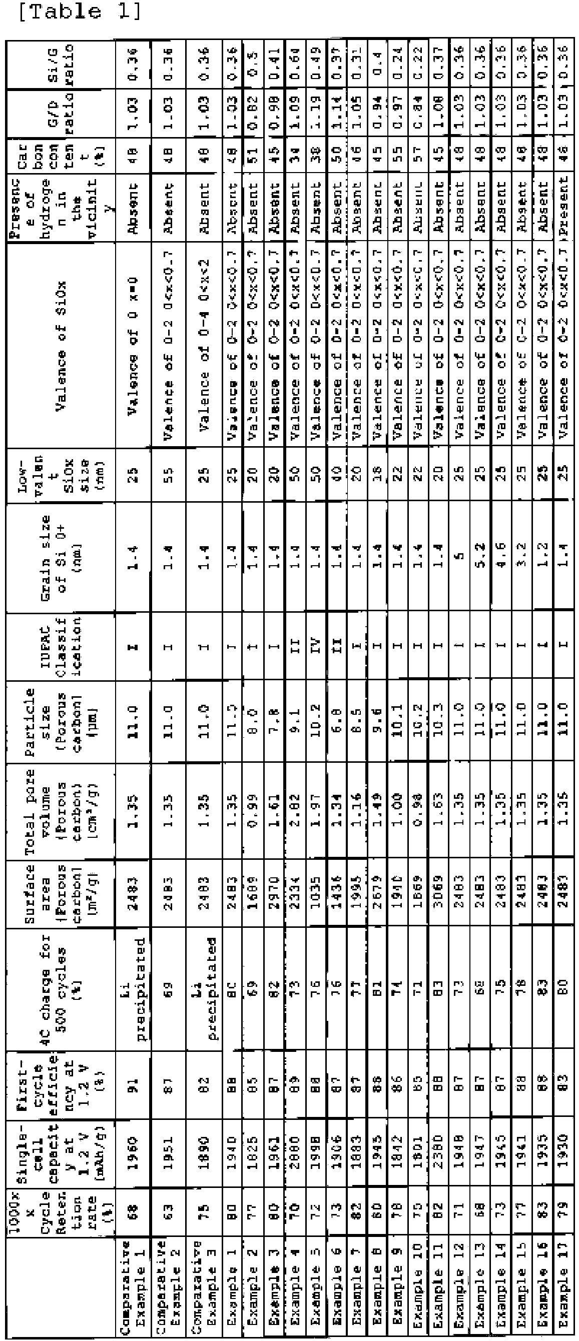

### (Comparative Example 1)

A porous carbon structure, as in Example 1, was provided. Thereafter, amorphous silicon was formed from a surface layer of the porous carbon structure particles to a place near the central portion under the same conditions as in Example 1 using SiH₄ gas at 415°C. Si-H bonds were contained in the porous carbon structure under this condition, and thus the temperature was raised to 435°C to produce Si-Si, thereby stabilizing Si-Si. Subsequently, the structure was cooled down to room temperature, and samples were taken out while opening to the atmospheric air. When this method is employed, a material without a low-valent silicon oxide compound can be produced as a prototype (unlike the present invention). Various measurements were performed as in Example 1, and the results thereof are shown in Table 1. Although capacity and initial coulombic efficiency were high, reactivity with the electrolytic solution was high, leading to degraded battery cycle characteristics. In particular, Li was precipitated during fast charging.

### (Comparative Example 2)

A negative electrode active material was produced in the same way as in Example 1, except that the same gas used in Comparative Example 1 was decomposed at 435°C, and SiOx-phase was bloated. Table 1 shows results of measurement performed as in Example 1. Based on cross-sectional TEM image analysis, a low-valent nano silicon oxide has a particle size of 55 nm. The SiOx phase also contains 0-valent Si, increasing the probability of contact with an electrolytic solution. Accordingly, battery characteristics were degraded.

### (Comparative Example 3)

An amorphous silicon was formed and cooled as in Comparative Example 1, and dry air was then introduced, and a material temperature was raised to 55°C. Various measurements were performed as in Example 1, and Table 1 shows results thereof. In particular, an acceptability of Li was deteriorated, and Li was precipitated during fast charging.

### (Example 2 to Example 11)

A negative electrode active material was produced in the same way as in Example 1, except that, as initial porous carbon structures to be provided, those having different characteristics were employed as shown in Table 1. Then, the same evaluations as in Example 1 were performed there. According to the results obtained in Examples 2 to 11, when considering a balance among capacity, efficiency, and other characteristics, it is considered that a pore volume is desirably 1 cm³/g or more, a BET specific surface area is desirably 1400 m²/g or more, and the IUPAC classification is desirably of Type I.

### (Example 12 to Example 16)

A negative electrode active material was produced by modifying conditions as follows for the porous carbon structures used in Example 1. The temperature was raised to 415°C, and monosilane gas was introduced for deposition for 4 hours. Subsequently, the temperature is further raised to grow a grain size of Si⁰⁺. Measurements of various types were performed as in Example 1, and the results thereof were shown in Table 1. As a result, when the structures were closer to an amorphous structure, capacities thereof were lowered. In contrast, a fast charging performance and battery cycle characteristics thereof were improved. According to the results from Examples 12 to 16, when the structures were closer to an amorphous structure, capacities thereof were lowered. In contrast, a fast charging performance and battery cycle characteristics thereof were improved.

### (Example 17)

A negative electrode active material was produced by subjecting a porous carbon structure, the same as that in Example 1, to oxidation treatment using half the amount of diluted oxygen compared with that used in Example 1. Measurements of various types were performed as in Example 1, and the results thereof were shown in Table 1. As a result, defects were observed in SiOx region.

### [Description of Each Drawing]

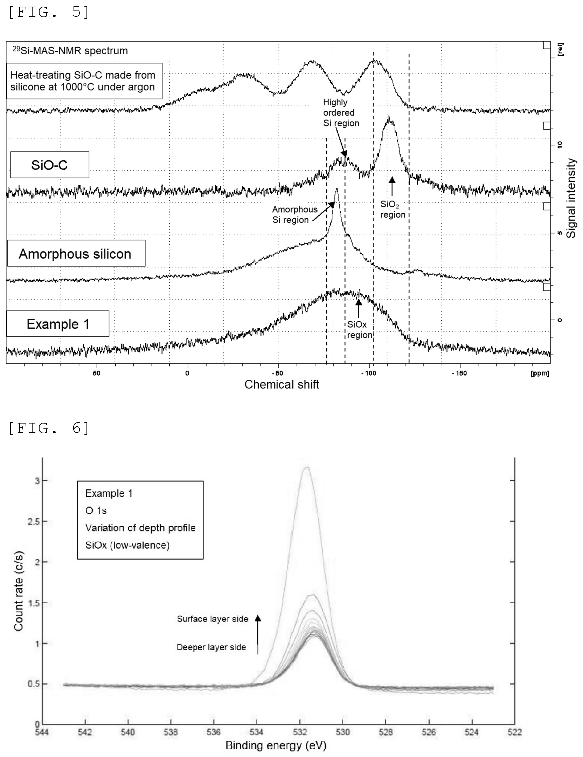

FIG. 5 shows solid-state ²⁹Si-MAS-NMR measurement results of the negative electrode active material in Example 1 and those of each Control Example. The following three types are shown as Control Examples: NMR measurement results of amorphous silicon as such; carbon-coated SiOx particles (SiO-C); and SiO-C made from silicone and heat-treated at 1000°C under argon. The negative electrode active material in Example 1 exhibits the presence of a peak attributed to amorphous silicon and a large SiOx region.

FIG. 6 shows a change in a depth-profile measurement in an O 1s region in an XPS measurement of the negative electrode active material in Example 1. As found from FIG. 6, the O 1s peak becomes smaller from the surface toward the depth direction, indicating that oxygen concentration decreases from the surface toward the deep layer side.

FIG. 7 shows a graph showing a result of an XPS measurement of the negative electrode active material at a Si 2p region in Example 1, and Comparative Examples 1 and 3. In Example 1, a peak is observed at 99 to 100 eV, indicating the presence of a large amount of the low-valent nano silicon oxide (SiOx) component. In Comparative Example 1, a peak is observed at 98.5 eV, indicating the presence of a large amount of the Si component. In Comparative Example 3, in addition to a peak at 99 to 100 eV, a shoulder peak is observed at 103 eV, indicating that a large amount of SiO₂ component is contained.

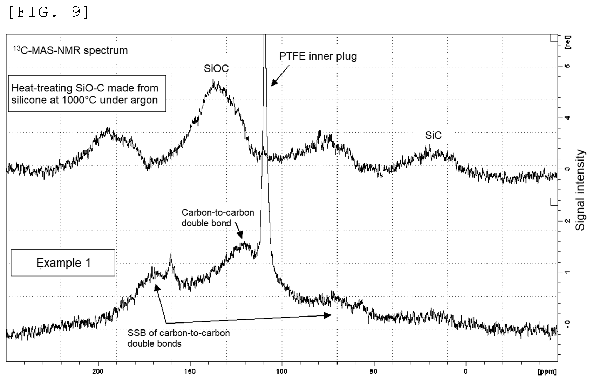

FIG. 9 shows a ¹³C-MAS-NMR spectrum in Example 1 and that of SiO-C made from silicone and heat-treated at 1000°C under argon in Control Example. In Example 1, a peak attributed to carbon-to-carbon double bonds is observed, and spinning sideband peaks attributed to the carbon-to-carbon double bonds are also observed.

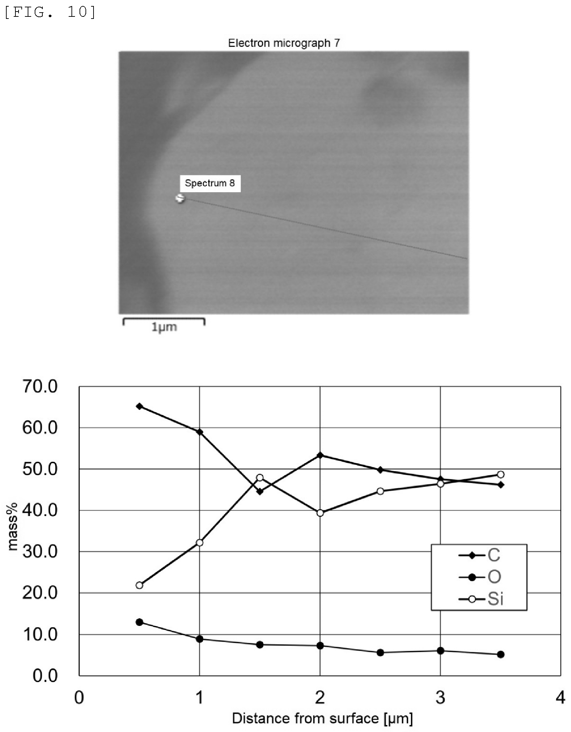

FIG. 10 shows the result of a TEM-EDX measurement of the negative electrode active material in Example 1. The upper part is a cross-sectional TEM image with a straight line indicating a measured location, and the lower part is a graph showing a relation between a distance from a material surface (on the straight line in the above image) and mass% of each element. As indicated in FIG. 10, oxygen concentration decreases from the surface of the negative electrode active material particles toward the deeper layer portion.

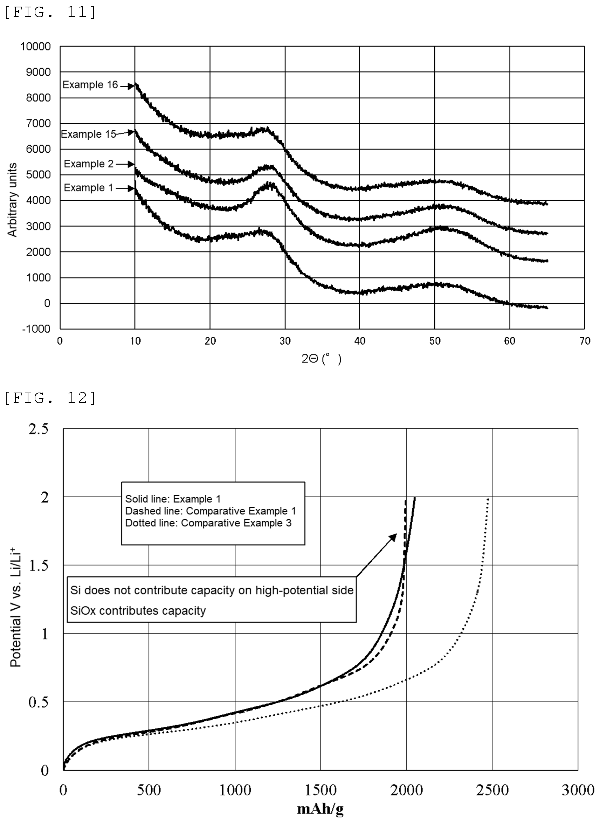

FIG. 11 shows X-ray diffraction spectra in Examples 1, 2, 15, and 16. A peak is observed near 2θ=28° in each Example, and crystallite sizes are calculated from these peaks. The same applies to other Examples and Comparative Examples.

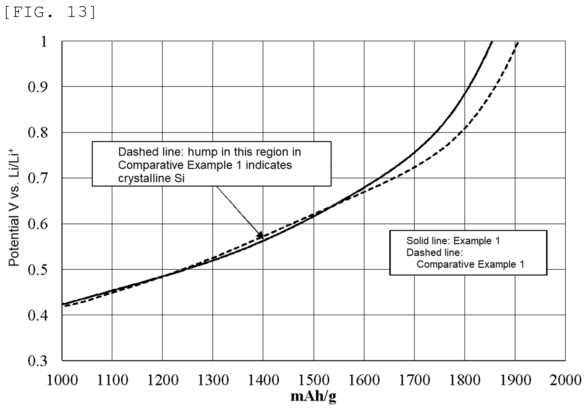

FIG. 12 shows a graph showing charge-and-discharge characteristics in Example 1, Comparative Example 1, and Example 11. FIG. 13 is a partly enlarged view of FIG. 12. As shown in FIGs. 12 and 13, the presence of crystalline Si is indicated in Comparative Example 1, while the presence of SiOx is suggested in Example 1.

The present description includes the following embodiments.
[1]: A negative electrode active material containing negative electrode active material particles, wherein
   the negative electrode active material particles contain a porous carbon structure,
   a low-valent nano silicon oxide in an amorphous state is dispersed within the porous carbon structure,
   the low-valent nano silicon oxide includes states represented by SiOx where "x" is less than 1.0, and
   the low-valent nano silicon oxide has a particle size of 50 nm or less on average, the particle size being determined by image processing of a cross-sectional TEM image.
[2]: The negative electrode active material of the above [1], wherein
   the low-valent nano silicon oxide is in a substantially composite state of 0-valent, 1-valent, and 2-valent.
[3]: The negative electrode active material of the above [1] or [2], wherein
   when the negative electrode active material particles are measured by solid-state ²⁹Si-MAS-NMR, hydrogen is not detected in a vicinity of the low-valent nano silicon oxide.
[4]: The negative electrode active material of any of the above [1] to [3], wherein
   the low-valent nano silicon oxide dispersed in the porous carbon structure has "x" that increases from a center toward a surface layer of the porous carbon structure.
[5]: The negative electrode active material of any of the above [1] to [4], wherein
   the porous carbon structure includes carbon-to-carbon double bonds in at least a portion thereof.
[6]: The negative electrode active material of any of the above [1] to [5], wherein
   a proportion of the porous carbon structure within a whole of the negative electrode active material particles is 38 mass% or more and 63 mass% or less.
[7]: The negative electrode active material of any of the above [1] to [6], wherein
   the low-valent nano silicon oxide has a broad peak having a peak top around -87 ppm in a solid-state ²⁹Si-MAS-NMR measurement.
[8]: The negative electrode active material of any of the above [1] to [7], wherein
   a grain size of 0-valent Si constituting the low-valent nano silicon oxide is in a range of 1 nm to 5 nm, in which the grain size is calculated using Scherrer's equation from a peak measured by X-ray diffraction measurement of the negative electrode active material particles.
[9]: The negative electrode active material of any of the above [1] to [8], wherein
   the negative electrode active material particles have a ratio of G to D in a range from 0.85 to 1.15, and have a ratio of Si to G of 0.25 or more and 0.5 or less, both obtained from a Raman spectrum.
[10]: The negative electrode active material of any of the above [1] to [9], wherein
   the porous carbon structure is predominantly of Type I according to the IUPAC classification, and has a surface area of 1400 m²/g or more and a pore volume of 1 cm³/g or more.
[11]: A method for producing a negative electrode active material containing negative electrode active material particles, the method comprising the steps of:
   providing a porous carbon structure;
   depositing silicon inside the porous carbon structure by introducing monosilane gas to the porous carbon structure while heating;
   cooling a material in which silicon has been deposited within the porous carbon structure to 50°C or lower; and
   after the cooling, in a state where a temperature of the material in which the silicon has been deposited within the porous carbon structure is adjusted so as to be maintained at 50°C or lower, converting at least a portion of the silicon into a low-valent nano silicon oxide by introducing oxygen diluted with nitrogen gas into the material in which the silicon has been deposited within the porous carbon structure,
   whereby producing negative electrode active material particles in which the low-valent nano silicon oxide in an amorphous state is dispersed within the porous carbon structure.

It should be noted that the present invention is not limited to the above-described embodiments. The embodiments are just examples, and any examples that have substantially the same feature and demonstrate the same functions and effects as those in the technical concept disclosed in claims of the present invention are included in the technical scope of the present invention.

## Claims

1. A negative electrode active material containing negative electrode active material particles, wherein
the negative electrode active material particles contain a porous carbon structure,
a low-valent nano silicon oxide in an amorphous state is dispersed within the porous carbon structure,
the low-valent nano silicon oxide includes states represented by SiOx where "x" is less than 1.0, and
the low-valent nano silicon oxide has a particle size of 50 nm or less on average, the particle size being determined by image processing of a cross-sectional TEM image.

2. The negative electrode active material according to claim 1, wherein
the low-valent nano silicon oxide is in a substantially composite state of 0-valent, 1-valent, and 2-valent.

3. The negative electrode active material according to claim 1, wherein
when the negative electrode active material particles are measured by solid-state ²⁹Si-MAS-NMR, hydrogen is not detected in a vicinity of the low-valent nano silicon oxide.

4. The negative electrode active material according to claim 1, wherein
the low-valent nano silicon oxide dispersed in the porous carbon structure has "x" that increases from a center toward a surface layer of the porous carbon structure.

5. The negative electrode active material according to claim 1, wherein
the porous carbon structure includes carbon-to-carbon double bonds in at least a portion thereof.

6. The negative electrode active material according to claim 1, wherein
a proportion of the porous carbon structure within a whole of the negative electrode active material particles is 38 mass% or more and 63 mass% or less.

7. The negative electrode active material according to claim 1, wherein
the low-valent nano silicon oxide has a broad peak having a peak top around -87 ppm in a solid-state ²⁹Si-MAS-NMR measurement.

8. The negative electrode active material according to claim 1, wherein
a grain size of 0-valent Si constituting the low-valent nano silicon oxide is in a range of 1 nm to 5 nm, in which the grain size is calculated using Scherrer's equation from a peak measured by X-ray diffraction measurement of the negative electrode active material particles.

9. The negative electrode active material according to claim 1, wherein
the negative electrode active material particles have a ratio of G to D in a range from 0.85 to 1.15, and have a ratio of Si to G of 0.25 or more and 0.5 or less, both obtained from a Raman spectrum.

10. The negative electrode active material according to claim 1, wherein
the porous carbon structure is predominantly of Type I according to the IUPAC classification, and has a surface area of 1400 m²/g or more and a pore volume of 1 cm³/g or more.

11. A method for producing a negative electrode active material containing negative electrode active material particles, the method comprising the steps of:
providing a porous carbon structure;
depositing silicon inside the porous carbon structure by introducing monosilane gas to the porous carbon structure while heating;
cooling a material in which silicon has been deposited within the porous carbon structure to 50°C or lower; and
after the cooling, in a state where a temperature of the material in which the silicon has been deposited within the porous carbon structure is adjusted so as to be maintained at 50°C or lower, converting at least a portion of the silicon into a low-valent nano silicon oxide by introducing oxygen diluted with nitrogen gas into the material in which the silicon has been deposited within the porous carbon structure,
whereby producing negative electrode active material particles in which a low-valent nano silicon oxide in an amorphous state is dispersed within the porous carbon structure.
